# EUROPÄISCHE PATENTANMELDUNG

(11) **EP 1 109 278 A2**
(43) Veröffentlichungstag der Anmeldung: **20.06.2001**
(21) Anmeldenummer: 00890351.0
(22) Anmeldetag: 27.11.2000
(51) Int. Cl.: H02B 1/18, H02B 1/20

(54) **NH-Sicherungs-Leiste oder NH-Sicherungs-Lastschaltleiste mit Kabelkanal**

(30) Priorität: 17.12.1999 AT 88199 U
(71) Anmelder: M. Schneider, Schaltgerätebau und Elektroinstallationen Gesellschaft m.b.H., 1160 Wien (AT)
(72) Erfinder: Portschy, Kurt, 1200 Wien (AT); Weiss, Andreas, 1230 Wien (AT)
(74) Vertreter: Hehenberger, Reinhard, Dipl.-Ing.

(57) **Zusammenfassung**

Die Erfassung von Leistungs- bzw. Betriebsdaten eines Netzes sowie der Funktionsfähigkeit von Sicherungen erfordert eine Verkabelung zu den Stromschienen bzw. Kontaktköpfen einer NH-Sicherungs-Leiste oder NH-Sicherungs-Lastschaltleiste.

Um diese Aufgabe zu lösen, wird eine NH-Sicherungs-Leiste oder NH-Sicherungs-Lastschaltleiste mit einem Gehäuse (1) mit einer Stromsammelschienen (8) zugewandten Unterseite (2) und zwei Seitenwänden (3) vorgeschlagen, bei der an der Unterseite (2) im Bereich wenigstens einer Seitenwand (3) ein Kabelkanal (15) vorgesehen ist, der zur Unterseite (2) hin offen ist.

## Beschreibung

Die Erfindung betrifft eine NH-Sicherungs-Leiste oder NH-Sicherungs-Lastschaltleiste mit einem Gehäuse mit einer Stromsammelschiene zugewandten Unterseite und zwei Seitenwänden.

Wenn im folgenden der Begriff "Leiste" verwendet wird, sind darunter NH-Sicherungs-Leiste oder NH-Sicherungs-Lastschaltleisten zu verstehen.

In der NH-Sicherungs-Leisten und NH-Sicherungs-Lastschaltleistentechnik sind zunehmende Bestrebungen erkennbar, Leistungs- bzw. Betriebsdaten des Netzes sowie die Funktionsfähigkeit von Sicherungen zu erfassen. Dies erfordert allerdings eine Verkabelung zu den Stromschienen bzw. Kontaktköpfen der zu überwachenden Pole, wofür bei einer dreipoligen Leiste sechs Kabel für Strommessung und/oder sechs Kabel für Spannungsmessung erforderlich sind. Da NH-Leisten für Ströme bis zu 1000 A eingesetzt werden, müssen auch Kabel mit relativ großen Querschnitten verwendet werden, wobei dann das Problem auftritt, daß bei standardisierten Leisten nicht ohne weiteres Platz für derartige Kabel ist, da die standardisierten Leisten räumlich bereits stark optimiert sind und Sicherheitsbestimmungen eingehalten werden müssen.

Der Erfindung liegt daher die Aufgabe zu Grunde, eine gattungsgemäße Leiste so weiterzuentwickeln, daß diese Raum für die Kabel bietet.

Gelöst wird diese Aufgabe durch eine Leiste mit den Merkmalen des Anspruches 1.

Bei der Erfindung wird der Weg eingeschlagen, an der Unterseite des Gehäuses der Leiste im Bereich wenigstens einer, vorzugsweise beider Seitenwände, einen nach unten offener Kabelkanal auszubilden, in dem die Kabel unter Einhaltung der erforderlichen Sicherheitsbestimmungen geführt werden können.

Bevorzugt sind in diesem Zusammenhang lösbar mit dem Gehäuse verbundene Deckel für den Kabelkanal bzw. die Kabelkanäle, da auf diese Weise der Kabelkanal nach dem Einlegen der Kabel sehr einfach verschlossen, aber auch geöffnet werden kann.

Da die Kabelkanäle an der Unterseite des Gehäuses Raum beanspruchen, kann der über dem Kabelkanal liegende Kanal für eine Stromschiene kleiner, insbesondere niedriger werden, so daß die Stromschiene weiter nach oben zu den Kontaktköpfen gerückt werden muß. Dadurch wiederum können sich Probleme der Art ergeben, daß die erforderlichen Abstände zwischen der Stromschiene und den Kontaktköpfen nicht mehr eingehalten werden und es somit zu Spannungsüberschlägen kommen kann.

Um dieses Problem zu lösen, wird in einer Ausführungsform der Erfindung vorgeschlagen, daß das Verhältnis von Höhe zu Breite der Stromschiene nicht größer als 10:1 ist. Bei dieser Ausführungsform der Erfindung wird die Stromschiene zwar weniger hoch, dafür aber etwas stärker, so daß letztlich der gleiche, leitende Querschnitt erhalten bleibt. Durch die geringere Höhe wird allerdings der Abstand zwischen Stromschiene und den Kontaktköpfen nicht verringert, so daß die Sicherheitsbestimmungen eingehalten werden können.

Als Alternative oder zusätzlich bietet sich an, daß die Stromschienen von einem Isolierprofil umgeben sind. Bei dieser Ausführungsform ist zwar keine Änderung der Stromschiene erforderlich, dafür ist aber ein geringfügig erhöhter Aufwand für das zusätzliche Anbringen des Isolierprofiles auf der Stromschiene erforderlich.

In einer weiteren bevorzugten Ausführungsform kann zur Lösung des angesprochenen Sicherheitsproblemes vorgesehen sein, daß der Kanal von einer Innenwand und einer Seitenwand begrenzt ist, und daß die Innenwand in jenen Bereichen, in denen die Stromschiene an elektrischen Kontakten vorbeiführt, eine Erhöhung aufweist, wobei besonders bevorzugt ist, wenn die Innenwand wenigstens 10 mm vorzugsweise 15 mm erhöht ist. Durch die wenigstens im Bereich der Pole bzw. Kontaktköpfe, an denen eine Stromschiene vorbeiführt, erhöhte Innenwand, wird der Weg, den ein Lichtbogen zwischen der Stromschiene und dem Pol überbrücken muß, verlängert, so daß auf diese Weise ebenfalls die erforderlichen Sicherheitsbestimmungen eingehalten werden können.

Schließlich kann alternativ oder zusätzlich vorgesehen sein, daß die Labyrinthdichtung durch eine Nut am Längsrand einer Seitenwand des Ober- oder Gehäuses oder Berührungsschutzes und einen Längsrand des zugeordneten Berührungsschutzes oder Gehäuses, der in diese Nut eingreift, gebildet wird.

Weitere Merkmale und Vorteile der Erfindung ergeben sich aus der nachfolgenden Beschreibung eines Ausführungsbeispieles der Erfindung unter Bezugnahme auf die Zeichnungen. Es zeigt: Fig. 1 einen Teil einer erfindungsgemäßen NH-Sicherungs-Lastschaltleiste im Schrägriß, Fig. 2 einen Schnitt durch die Leiste im Bereich eines Kontaktkopfes, Fig. 3 nur das Gehäuse der Leiste von unten und Fig. 4 die an Sammelschienen befestigte Leiste von unten.

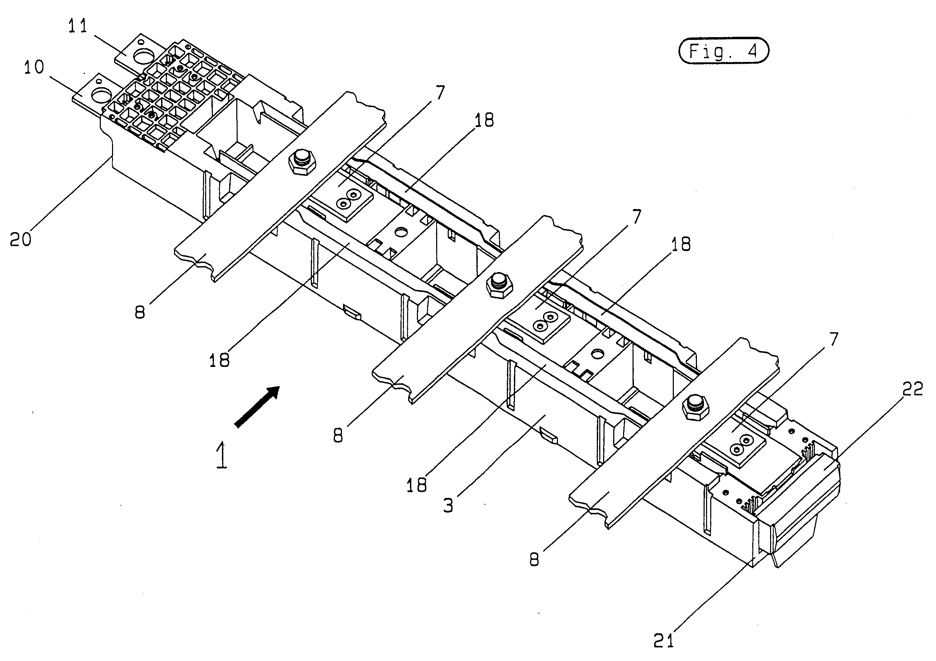

Wie in den Zeichnungen zu sehen ist, weist eine erfindungsgemäße NH-Sicherungs-Lastschaltleiste, von der nur der Grundkörper und das Kontaktsystem dargestellt sind, ein Gehäuse 1 mit einer Unterseite 2 und zwei Seitenwänden 3 auf. Da der Berührungsschutz der Leiste nicht dargestellt ist, sind die Kontaktköpfe 4, 5 und 6 der Leiste zu sehen. Die Kontaktköpfe 4a (in der Zeichnung nicht dargestellt), 4b, 5a, 5b und 6a, 6b gehören paarweise zusammen, wobei die Kontaktköpfe 4a, 5a und 6a über Stromschienen 7 mit Sammelschienen 8 verbunden sind (Fig. 4). Die zugehörigen Kontaktköpfe 4b, 5b und 6b wiederum sind mit Stromschienen 9, 10 und 11 verbunden, die an einer Stirnseite 20 aus dem Gehäuse 1 geführt sind (Fig. 4). Die Kontaktköpfe 4a, 4b, 5a, 5b und 6a, 6b sind bei geschlossener Lastschaltleiste mittels nicht dargestellter Sicherungen verbunden.

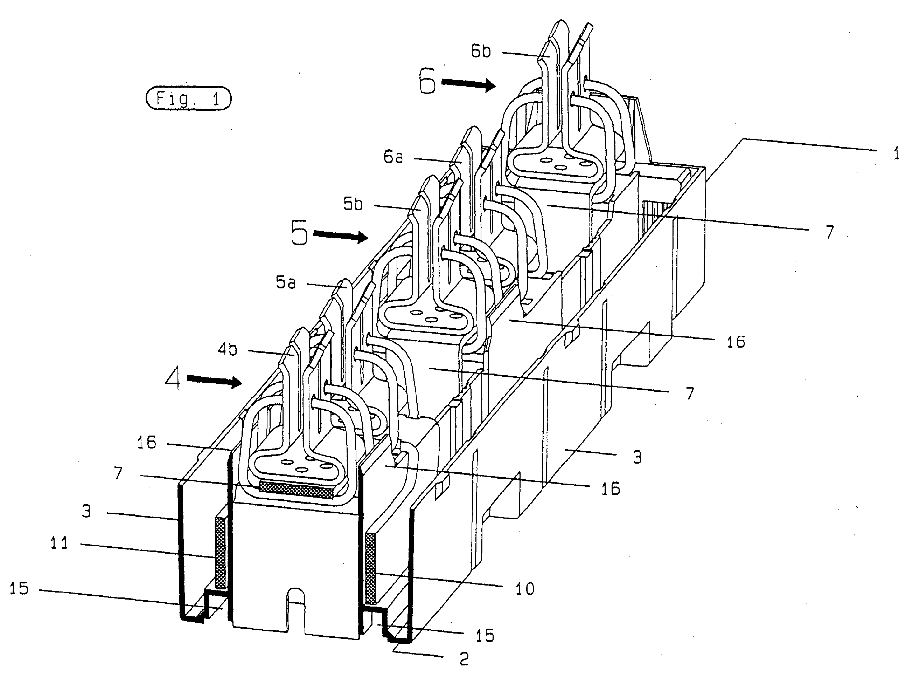

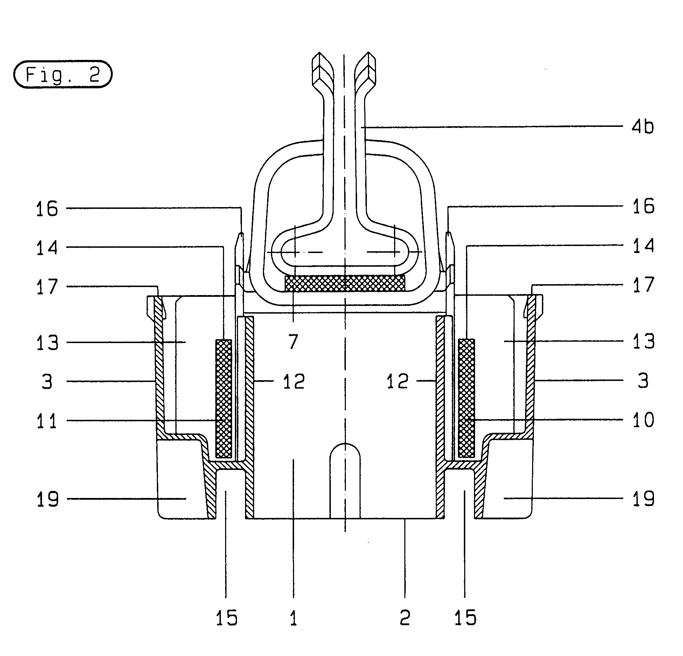

Wie in den Fig. 1 und 2 zu sehen ist, sind zwischen den Seitenwänden 3 und Innenwänden 12 Kanäle 13 gebildet, in denen die Stromschienen 10 und 11 der vom Ende 20 entfernt liegenden Kontaktköpfe 5a, 6a geführt sind. Die Stromschiene des nicht dargestellten Kontaktkopfes 4a wird gerade bzw. stirnseitig am Ende 20 aus dem Gehäuse 1 herausgeführt.

Damit die Stromschienen 10 und 11 möglichst weit von den Kontaktköpfen anderer Pole entfernt sind (bei der Stromschiene 10 sind dies die Kontaktköpfe 4a, 4b und bei der Stromschiene 11 die Kontaktköpfe 4a, 4b, 5a, 5b) muß die Oberkante 14 der Stromschienen 10 und 11 möglichst weit unten, d.h. möglichst weit von den kritischen Kontaktköpfen entfernt sein, um die Bildung von Lichtbögen zu verhindern, so daß die Stromschienen 10 und 11 idealerweise möglichst nah an der Unterseite 2 des Gehäuses 1 geführt werden sollten.

Um Raum für Kabel zu schaffen, die mit den einzelnen Kontaktköpfen 4, 5, 6 verbunden sind, um die Betriebsdaten des Netzes zu erfassen, wird bei der Erfindung vorgeschlagen, an der Unterseite 2 im Bereich der Seitenwände 3 Kabelkanäle 15 zu schaffen, die zur Unterseite 2 hin offen sind. Aus technischen Gründen steht der Bereich 19 außerhalb der Kabelkanäle 15 nicht zur Verfügung und auch die Stromschienen 10 und 11 müssen aus Sicherheitsgründen möglichst nah an den Innenwänden 12 liegen, so daß die Stromschienen 10 und 11 durch die Kabelkanäle 15 in Richtung zu den Kontaktköpfen 4, 5, 6 verschoben werden müssen.

Um dennoch die Sicherheitsbestimmungen zu erfüllen, kann eine oder eine Kombination der folgenden Maßnahmen getroffen werden.

Zunächst bietet sich die Möglichkeit, die Stromschienen 10, 11 etwas stärker, dafür weniger hoch auszuführen, so daß die Oberkante 14 tatsächlich nicht weiter in Richtung der Kontaktköpfe 4, 5 und 6 verschoben, gleichzeitig aber der leitende Querschnitt der Stromschienen 10 und 11 nicht verringert wird.

Zusätzlich oder alternativ kann vorgesehen sein, die Stromschienen 10 und 11 mit einem aufsteckbaren Isolierprofil abzudecken oder diese mit einer Isolationsschicht zu ummanteln, was in den Zeichnungen allerdings nicht dargestellt ist.

Schließlich wird erfindungsgemäß noch vorgeschlagen, die Innenwände 12 im Bereich der kritischen Kontaktköpfe 4 bzw. 5 höher auszuführen als die Seitenwände 3. Dies wird bevorzugt so ausgeführt, daß im Bereich der Kontaktköpfe 4 und 5 Erhöhungen 16 an den Innenwänden 12 angeformt sind, durch welche die Kontaktköpfe 4 und 5 besser gegenüber den Stromschienen 10 und 11 abgedeckt bzw. isoliert werden.

Damit die erfindungsgemäße Leiste bei aufgesetztem Berührungsschutz auch nach außen besser isoliert wird, was insbesondere bei nach oben gerückter Oberkante 14 der Stromschienen 10 und 11 von Bedeutung ist kann schließlich noch vorgesehen sein, daß der dem oberen Längsrand 17 des Gehäuses 1 zugeordnete Rand des Berührungsschutzes der Leiste eine Nut aufweist, in welche der Rand 17 eingreift. Auf diese Art und Weise wird eine Labyrinthdichtung geschaffen, welche eine verbesserte Isolation schafft. Es versteht sich, daß die Nut natürlich auch im Bereich des Randes 17 am Gehäuse 1 vorgesehen sein kann, in welche der zugeordnete Rand des Berührungsschutzes eingreift.

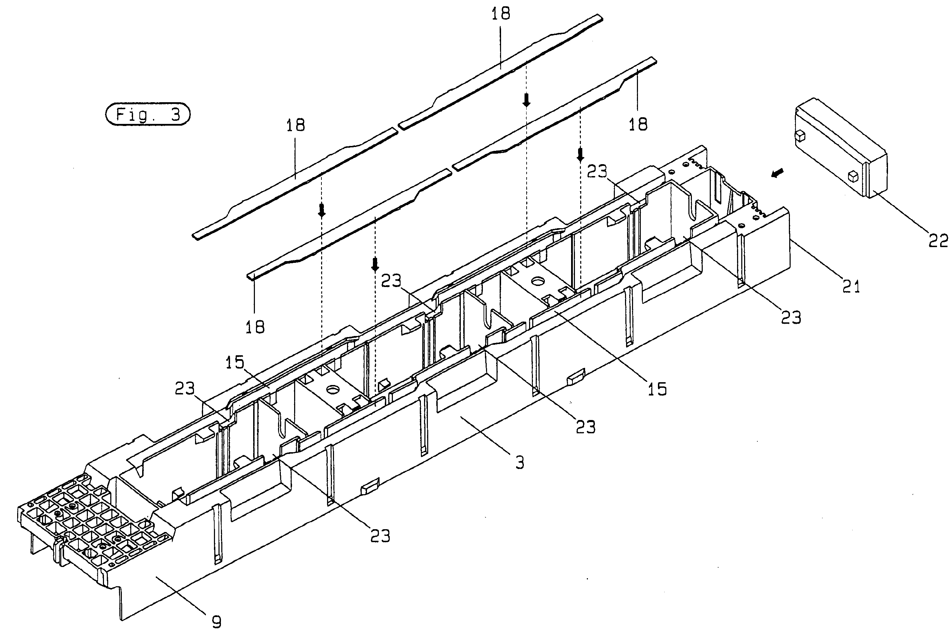

Die Kabel werden durch in Fig. 3 gezeigte Ausnehmungen 23 in den Innenwänden 12 in die Kabelkanäle 15 und in diesen bis zu einer Klemme 22 am Ende 21 des Gehäuses 1 geführt. An der Klemme 22 können dann bei Bedarf die Zuleitungen zu den jeweiligen Meßgeräten angeklemmt werden.

Um die in die Kabelkanäle 15 eingelegten Kabel gegen Herausfallen zu sichern und des weiteren eine zusätzliche Isolation zu den Sammelschienen 8 zu schaffen, sind Deckel 18 vorgesehen, welche wie in Fig. 3 dargestellt auf die Kabelkanäle aufgesetzt und bevorzugt über Schnappverbindungen dort befestigt werden können. Bevorzugt sind, wie Fig. 3 zeigt, vier Deckel 18 vorgesehen, wobei es sich aber versteht, daß auch nur zwei längere Deckel oder auch mehr als vier kürzere Deckel vorgesehen sein können.

## Patentansprüche

1. NH-Sicherungs-Leiste oder NH-Sicherungs-Lastschaltleiste mit einem Gehäuse (1) mit einer Stromsammelschienen (8) zugewandten Unterseite (2) und zwei Seitenwänden (3), dadurch gekennzeichnet, daß an der Unterseite (2) im Bereich wenigstens einer Seitenwand (3) ein Kabelkanal (15) vorgesehen ist, der zur Unterseite (2) hin offen ist.

2. Leiste nach Anspruch 1, dadurch gekennzeichnet, daß im Bereich jeder Seitenwand (3) ein Kabelkanal (15) vorgesehen ist.

3. Leiste nach Anspruch 1 oder 2, dadurch gekennzeichnet, daß auf der der Unterseite (2) gegenüberliegenden Seite des Kabelkanals (15) ein Kanal (13) für eine Stromschiene (10, 11) vorgesehen ist.

4. Leiste nach Anspruch 3, dadurch gekennzeichnet, daß das Verhältnis von Höhe zu Breite der Stromschiene (10, 11) nicht größer als 10:1 ist.

5. Leiste nach Anspruch 3 oder 4, dadurch gekennzeichnet, daß der Kanal (13) von einer Innenwand (12) und einer Seitenwand (3) begrenzt ist, und daß die Innenwand (12) in jenen Bereichen, in denen die Stromschiene (10, 11) an elektrischen Kontakten (4, 5, 6) vorbeiführt, eine Erhöhung (16) aufweist.

6. Leiste nach Anspruch 5, dadurch gekennzeichnet, daß die Innenwand (12) wenigstens 10 mm vorzugsweise 15 mm erhöht ist.

7. Leiste nach einem der Ansprüche 3 bis 6, dadurch gekennzeichnet, daß die Stromschienen (10, 11) von einem Isolierprofil umgeben sind.

8. Leiste nach einem der Ansprüche 3 bis 7, dadurch gekennzeichnet, daß zwischen Seitenwänden eines auf das Gehäuse (1) aufgesetzten Berührungsschutzes und den Seitenwänden (3) des Gehäuses (1) eine Labyrinthdichtung gebildet ist.

9. Leiste nach Anspruch 8, dadurch gekennzeichnet, daß die Labyrinthdichtung durch eine Nut am Längsrand (17) einer Seitenwand (3) des Gehäuses (1) oder Berührungsschutzes und einen Längsrand des zugeordneten Berührungsschutzes oder Gehäuses (1), der in diese Nut eingreift, gebildet wird.

10. Leiste nach einem der Ansprüche 1 bis 9, gekennzeichnet durch lösbar mit dem Gehäuse (1) verbundenen Deckeln (18) für den Kabelkanal (15) bzw. die Kabelkanäle (15).

11. Leiste nach einem der Ansprüche 1 bis 10, dadurch gekennzeichnet, daß an einem Ende (21) des Gehäuses (1) eine Klemme (22) angeordnet ist, an der im Kabelkanal (15) liegende Kabel zur weiteren Verbindung mit Zuleitungen zu Meßgeräten angeklemmt sind.
